# EUROPEAN PATENT SPECIFICATION

(11) **EP 2 099 871 B1**
(45) Date of publication and mention of the grant of the patent: **13.10.2010**
(21) Application number: 07847208.1
(22) Date of filing: 19.11.2007
(51) Int. Cl.: C09D 5/24, C09D 7/12, C09D 4/00

(54) **CURABLE LIQUID COATING COMPOSITION, CURED FILM AND ANTISTATIC LAMINATE**
HÄRTBARE FLÜSSIGE BESCHICHTUNGSZUSAMMENSETZUNG, GEHÄRTETER FILM SOWIE ANTISTATIK-LAMINAT
COMPOSITION DE REVÊTEMENT LIQUIDE DURCISSABLE, FILM DURCI ET STRATIFIÉ ANTISTATIQUE

(30) Priority: 21.11.2006 EP 06124503
(43) Date of publication of application: 16.09.2009
(73) Proprietor: ChemIP B.V., 6167 RD Geleen (NL); Kriya Materials B.V., 6167 RD Geleen (NL)
(72) Inventor: BELT, VAN DE, Roelof, 5684 GH Best (NL); CURRIE, Edwin, 6133 AM Sittard (NL)
(74) Representative: Renkema, Jaap
(86) International application number: PCT/EP2007/062513
(87) International publication number: WO 2008/061962

(56) References cited:
- WO-A-02/31063
- WO-A-2004/090053
- WO-A-2006/054888

## Description

### Field of the Invention

The present invention relates to a curable liquid composition, a cured film, and an antistatic laminate. More particularly, the present invention relates to a curable liquid composition excelling in curability and capable of forming a coating (film) which excels in antistatic properties, hardness, scratch resistance, and transparency on various substrates such as plastic (polycarbonate, polymethylmethacrylate, polystyrene, polyester, polyolefin, epoxy resin, melamine resin, triacetylcellulose resin, ABS resin, AS resin, and norbornene resin), metal, wood, paper, glass, ceramics, and slate. The present invention also relates to a cured film of the composition and an antistatic laminate.

### Background of the invention

Curable liquid compositions for making antistatic films are known in the art. WO 2004/090053 discloses a composition comprising antistatic particles (A), a radiation curable component (B) and two solvents, one being a good solvent for component (B), the other being a bad solvent for component (B). This composition has a number of drawbacks. The amount of antistatic particles that can be applied in the composition is limited and the film has a limited transparency. Furthermore the amount of water that can be used in these compositions is limited, which results in either inferior antistatic properties or limited stability of the coating composition.

WO 2006/054888 describes a radiation curable composition comprising nanoparticles of a metal compound, a compound having at least two polymerizable unsaturated groups, and one or more solvents.

The object of the present invention is to provide a coating composition which has a wide applicability, giving a coating with high transparency, low surface resistivity and superior mechanical robustness.

This object is achieved by a curable liquid composition comprising
a) 0.5-20 wt% of conductive particles
b) 0.4-10wt% of a curable component having at least two polymerizable groups
c) 5-50 wt% of water.
d) 5-50 wt% of a solvent D
e) 30-80 wt% of a solvent E
wherein solvent D is an alcohol or a ketone and solvent E is an organic compound comprising one hydroxy group and one ether group, wherein the organic compound comprises between 3 and 8 carbon atoms, which forms an azeotrope with water.

In one embodiment, the invention relates to a curable liquid composition comprising
a) 0.5-20 wt% of conductive particles
b) 0.4-10wt% of a curable compound B having at least two polymerizable groups
c) 5-50 wt% of water
d) 15-50 wt% of a solvent D
e) 30-80 wt% of a solvent E
wherein solvent D is an alcohol or a ketone and solvent E is an organic compound comprising one hydroxy group and one ether group, wherein the organic compound comprises between 3 and 8 carbon atoms, which forms an azeotrope with water.

In a preferred embodiment, the invention relates to a curable composition comprising
a) 1-10 wt% of conductive particles
b) 0.5-5 wt% of a radiation curable compound having at least two polymerizable groups
c) 20-40 wt% water
d) 20-40 wt% of solvent D
e) 49-70 wt% of solvent E
wherein solvent D is an alcohol or a ketone and solvent E is an organic compound comprising one hydroxy group and one ether group, wherein the organic compound comprises between 3 and 8 carbon atoms, which forms an azeotrope with water.

The liquid composition of the present Invention has the advantage that it can be used to make a film which has a high transparency and good conductive properties. The composition contains a relative high amount of water. Water is used to stabilize the conductive particles. Furthermore the high amount of water is preferred in order to achieve the conductive properties of the film after applying it to a substrate and cure. The presence of solvents D and E gives the right combination of coating stability and conductive properties of the film.

### Detailed description of the invention.

### Conductive particle A

The composition of the present invention comprises particles. The particles used in the present invention contain, as a major component, an oxide of at least one element selected from the group consisting of indium, antimony, zinc, and tin from the viewpoint of securing conductivity and transparency of the cured film of the curable liquid composition. These oxide particles are conductive particles.

As specific examples of the oxide particles used, at least one type of particles selected from the group consisting of tin-doped indium oxide (ITO), antimony-doped tin oxide (ATO), fluorine-doped tin oxide (FTO), phosphorus-doped tin oxide (PTO), zinc antimonate (AZO), indium-doped zinc oxide (IZO), and zinc oxide can be given. Of these, antimony-doped tin oxide (ATO) and tin- doped indium oxide (ITO) are preferable. These particles may be used either individually or in combination of two or more.

In an embodiment, the conductive particles are surface treated.

In a preferred embodiment the particles comprise organic surface groups. Examples of such groups are alkyisllanes such as methyltrimethoxysilane, methyltriethoxysilane, trimethylmonomethoxysilane and phenyltrimethoxysilane. compounds. These compounds may be used either individually or in combination of two or more.

Specific examples of alkoxysilane compounds with an reactive group comprise (meth)acrylate compounds, vinyl compounds, epoxy compounds, amine compounds, and mercapto compunds. Examples are methacryloxypropyltrimethoxysilane, acryloxypropyltrimethoxysilane, and vinyltrimethoxysilane; glycidoxypropyltriethoxysilane and glycidoxypropyltrimethoxysilane; aminopropyltriethoxysilane and aminopropyltrimethoxysilane; mercaptopropyltrimethoxysilane and mercaptopropyltriethoxysilane.

Of these, methyltrimethoxysilane, methyltriethoxysilane, and methacryloxypropyltrimethoxysilane are preferable from the viewpoint of dispersion stability of the surface-treated oxide particles.

The conductive particles preferably have a small size in view of the conductivity or low surface resistivity of the layer prepared from the compositon. Preferably the particles have a mean average size (measured with dynamic light scattering in a suitable solvent according to ASTM 4519.1) between 1 and 100 nm, preferably a mean average size between 5 and 50 nm.

The composition of the present invention comprises between 0.5 and 20 wt% of conductive particles, relative to the total weight of the composition. Preferably the amount of conductive particles ranges between 1 and 10 wt%.

### Curable component B

Component B used in the present invention comprises a compound having at least two reactive groups. In general, component B may increase the hardness, scratch resistance and chemical stability of the coated substrate. In the case that component A has reactive surface groups, it is preferable that the reactive groups of component B may react with the surface groups of component A.

The reactive groups in component B may be acrylate, methacrylate, vinyl, epoxy, urethane, isocyanate, or hydroxyl groups. In a preferred embodiment of the present invention, the groups are acrylate and/or methacrylate groups.

As examples of suitable compound trimethylolpropane tri (meth) acrylate, ditrimethylolpropane tetra (meth) acrylate, pentaerythritol tri (meth) acrylate,pentaerythritol tetra (meth) acrylate, dipentaerythritol penta (meth) acrylate, dipentaerythritol hexa (meth) acrylate, glycerol tri (meth) acrylate, tris (2-hydroxyethyl) isocyanurate tri (meth) acrylate, ethylene glycol di (meth) acrylate, 1, 3- butandiol di (meth) acrylate, 1, 4-butanediol di (meth) acrylate, 1,6-hexanediol di (meth) acrylate, neopentyl glycol di (meth) acrylate, diethylene glycol di (meth) acrylate, triethylene glycol di (meth) acrylate, dipropylene glycol di (meth) acrylate, bis (2-hydroxyethyl) isocyanurate di (meth) acrylate,tricyclodecanediyldimethanol di (meth) acrylate, poly (meth) acrylates of ethylene oxide or propylene oxide addition product of a starting alcohol used to produce these compounds, oligoester (meth) acrylates having at least two (meth) acryloyl groups in the molecule, oligoether (meth) acrylates, oligourethane (meth) acrylates, and oligoepoxy (meth) acrylates, can be given.

The component (B) may be used as a single compound or combinations of two or more may be used. The component (B) is added in an amount of 0.4-10 wt% relative to the total weight of the coating composition. Preferably the amount of component (B) is between 0.5 and 5 wt%.

### Water.

The compositon of the present invention comprises a relatively high amount of water. Water is used to stabilize the conductive particles. Furthermore the high amount of water is preferred in order to achieve the conductive properties of the film after applying it to a substrate and cure. In the composition of the present invention the amount of water is typically between 15 and 50 wt% of the total weight of the composition, preferably between 20 and 40 wt%.

### Solvent D

The compositon of the present invention comprises a solvent D. Solvent D is chosen from the group consisting of alcohols and ketones. As examples of alcohols methanol, ethanol, isopropyl alcohol, isobutanol, diethylene glycol, benzyl alcohol, phenethyl alcohol, and the like can be given. As examples of ketones, acetone, methyl ethyl ketone, methyl isobutyl ketone, and the like can be given.

Preferably solvent D is chosen from the group consisting of methanol, ethanol, isopropyl alcohol and isobutanol. Most preferably solvent D is isopropylalcohol.

The amount of solvent D ranges typically between 5 and 50 wt% of the total composition, preferably between 20 and 40 wt% of the composition.

### Solvent E

The composition of the present invention comprises a solvent E, which forms an azeotrope with water. Solvent E is an organic compound comprising one hydroxy group and one ether group, wherein the organic compound comprises between 3 and 8 carbon atoms, preferably between 3 and 5 carbon atoms.

The presence of solvent E ensures a complete removal of water from the coating during the drying step, and ensures high transparency and low surface resistivity of the coating due to a very homogeneous coating with homogeneous distribution of conductive particles A.

Solvent E preferably has a boiling point below 150 °, more preferably the boiling point is below 130 °C. Solvent E forms an azeotrop with water, wherein the amount of water is preferably at least 32 wt%, more preferably at least 40 wt%, and still more preferably more then 45 wt%.

Solvent E preferably is chosen from the group consisting of 1-methoxy-2-propanol, 3-methoxy-1-butanol, and 2-methoxy-ethanol. Most preferably solvent E is 1-methoxy-2-propanol.

Solvent E may be used as a single component or combinations of solvents that form an azeotrope may be used.

The amount of solvent E typically ranges between 30 and 80 wt% of the coating composition. Preferably the amount of solvent E is between 41 and 70 wt%. In one embodiment of the present invention it is also preferred that the amount of solvent E is higher then the amount of water present in the coating composition.

### Additional components.

The coating composition may contain additional components. Examples of additional components include, photoinitiators, antioxidants, antistatic agents, light stabilizers, inhibitors, leveling agents, surfactants, and lubricants. Also, non-conductive nanoparticles may be added to the coating composition as sofar that they do not cause settling or gellation of the coating liquid.

Specifically, silica nanoparticles may be added to the coating composition. These nanoparticles may enhance the scratch resistance of the coated substrate, lower the refractive index of the coating compostion or reduce the reflection of the coated substrate. These silica nanoparticles may or may not contain surface groups, as described in the silane modification of component A. Examples of silica nanoparticles are IPA-ST, MT-ST, MEK-ST, NBA-ST, ST-UP, ST-20, ST-40 and the like from Nissan Chemical Industries.

Photoinitiators can be used to cure component (B) of the coating composition. The cure reaction may be initiated thermally or by actinic radiation. In the present invention, actinic radiation refers to visible rays, ultraviolet rays, deep ultraviolet rays. X-rays, and electron beams. As examples of a photoinitiator 1-hydroxycyclohexyl phenyl ketone, 2, 2-dimethoxy-2-phenylacetophenone, xanthone, fluorenone, benzaldehyde, fluorene, anthraquinone, triphenylamine, carbazole, 3-methylacetophenone, 4chlorobenzophenone, 4,4'-dimethoxybenzophenone, 4,4'-diaminobenzophenone, Michler's ketone, benzoin propyl ether, benzoin ethyl ether, benzyl dimethyl ketal, 1- (4- isopropylphenyl)-2-hydroxy-2-methylpropan-1-one, 2-hydroxy-2-methyl-1- phenylpropan-1-one, thioxanethone, diethylthioxanthone, 2-isopropylthioxanthone, 2chlorothioxanthone,2-methyl-1- [4- (methylthio) phenyl]-2-morpholino-propan-1-one, 2,4, 6-trimethylbenzoyidiphenylphosphine oxide,bis- (2,6-dimethoxybenzoyl)-2, 4,4trimethylpentylphosphine oxide, and the like can be given.

The photoinitiator may be added in an amount of preferably 0.01-3 parts by weight, and still more preferably 0.1-2 parts by weight relative to the total composition.

### II. Cured film and antistatic laminate

The cured film of the present invention can be obtained by applying and drying the curable liquid composition, and curing the dried composition by applying radiation.

In an embodiment a method for making a film with a low surface resistivity, comprises the steps of
a) applying a thin layer of the composition as defined in the present invention on a substrate
b) evaporating the solvents from the coating layer and
c) curing the film

In an embodiment the film is cured by applying actinic radiation.

The surface resistivity of the resulting cured film is 1x10¹² Ω or less, preferably 1x10¹⁰ Ω or less, and still more preferably 1x10⁸ Ω or less. If the surface resistivity exceeds 1x10¹² Ω, the antistatic properties may be insufficient, whereby dust may easily adhere, or the adhering dust may not be easily removed.

There are no specific limitations to the method of applying the composition. For example, a conventional method such as a roll coating method, spray coating method, flow coating method, dipping method, screen printing method, or Ink jet printing method may be used.

There are no specific limitations to the radiation source used to cure the composition insofar as the applied composition can be cured in a short period of time.

As examples of the source of visible rays, sunlight, a lamp, a fluorescent lamp, and a laser, can be given. As the source of ultraviolet rays, a mercury lamp, a nalide lamp, and a laser, can be given. As examples of the source of electron beams,a method of utilizing thermoelectrons produced by a commercially available tungsten filament, a cold cathode method which causes electron beams to be generated by applying a high voltage pulse to a metal, a secondary electron method which utilizes secondary electrons produced by the collision of ionized gaseous molecules and a metal electrode, and the like can be given.

The thickness of the cured film is preferably 0.1-20 µm. In applications such as a touch panel or a CRT In which scratch resistance of the outermost surface is Important, the thickness of the cured film is preferably 2-16 µm. In the case of using the cured film as an antistatic film for an optical film, the thickness of the cured film is preferably 0.1-10 µm.

In the case of using the cured film for an optical film, transparency is necessary. Therefore, the total light transmittance of the cured film is preferably 85% or more. More preferable, the cured film does not increase the total haze of the coated substrate by more than 2%, more preferable more than 1% with respect to the non-coated substrate.

As a substrate to which the cured film of the present invention is applied, a substrate made of a metal, ceramics, glass, plastic, wood, slate, or the like may be used without specific limitations. As a material for making use of high productivity and industrial applicability of radiation curability, it is preferable to apply the cured film to a film-type or fiber-type substrate. A plastic film or a plastic sheet is a particularly preferable material. As examples of plastic, polycarbonate, polymethylmethacrylate, polystyrene/polymethylmethacrylate copolymer, polystyrene, polyester, polyolefin, triacetylcellulose resin, diallylcarbonate of diethylene glycol(CR- 39), ABS resin, AS resin, polyamide, epoxy resin, melamine resin, and cyclic polyolefin resin (norbomene resin, for example), can be given.

### Applications

The crosslinked coating on a substrate in the present invention may be applied to prevent static electricity buildup, for scratch protection, for providing the substrate with a particular color or optical effect, or to provide IR absorption.

The present invention also relates to articles having at least one surface provided with a film having a low surface resistivity, obtained by a process according to any one of claims 10-11 or obtained by applying a composition as defined in any one of claims 1-9 on the at least one surface.

In the case of an antistatic coating on a plastic film, the coated substrate is suitable for use for example in the display industry, packaging industry, lens Industry, optical discs, solar cells, automotive windows and architectural panels. The present invention therefore also relates to a display film having a coasting prepared from a composition according to any one of claims 1-9. In the display Industry, the substrates can be used as coated protective sheets, polarizers, plasma films and Fresnel lenses and components thereof; substrates can be used in the appliance & household industry, i.e. protective covers etc; substrates can be used in the electronics industry, i.e. electrostatic chargeable films, and protective sheets ; substrates can be used in the packaging industry, i.e. electronics packaging, and medical packaging; substrates may be used in combination with RFID chips.

The present invention therefore also relates to RIFD chips comprising a coating obtained from a composition according to any one of claims 1-9.

In the case of providing an antireflection function to an optical article, it is known in the art that a method of forming a low-refractive-index layer or a multi- layer structure consisting of a low-refractive-index layer and a high-refractive-index layer on a substrate or a substrate provided with a hard coat treatment is effective. The cured film of the present Invention is useful as a layer structure which makes up an antistatic laminate for providing an antireflection function to an optical article.

Specifically, an antistatic laminate having antireflection properties can be produced by using the cured film of the present invention in combination with a film having a refractive index lower than that of the cured film. As the antistatic laminate, a laminate including a coat layer having a thickness of 0.05-0.20 µm and a refractive index of 1.30-1.45 as a low-refractive-Index layer formed on the cured film of the present invention can be given. As another examples of the antistatic laminate, a laminate including a coat layer having a thickness of 0.05-0.20 µm and a refractive Index of 1.60-2.20 as a high-refractive-index layer formed on the cured film of the present invention, and a coat layer having a thickness of 0.05-0.20 µm and a refractive index of 1.30-1.48 as a low-refractive-index layer formed on the high-refractive-index layer can be given.

In the production of the antistatic laminate, in order to provide other functions such as a non-glare effect, a selective light-absorption effect, weatherability, durability, or transferability, a layer including light scattering particles with a thickness of 1lim or more, a layer including dyes, a layer including UV absorbers, an adhesive layer, or an adhesive layer and a delamination layer may be added. Moreover, such a function providing component may be added to the antistatic curable composition of the present invention as one of the components.

The antistatic laminate of the present invention is suitably used as a hard coat material for preventing stains or cracks (scratches) on plastic optical parts, touch panels, film-type liquid crystal elements, plastic casing, plastic containers, or flooring materials, wall materials, and artificial marble used for an architectural interior finish; as an adhesive or a sealing material for various substrates; or as a vehicle for printing ink.

### Examples

The present invention is illustrated by the following examples.

### Example 1: surface modification ATO particle

165.49 gr isopropylalcohol is added to192.17 gr of an aqueous dispersion of Antimony doped Tinoxide particles. The ATO dispersion is commercially available from Nano Specials B.V. in Geleen (the Netherlands) and contains appr. 12w% ATO particles.

Following this 2.36 gr 3-methacryloxypropyl-trimethoxysilane (Dynasylan-MEMO from Degussa AG) is diluted in 106.5 gr isopropylalcohol prior to adding to the ATO dispersion. Finally 230.14 gr isopropylalcohol is added. The obtained dispersion is then heated under constant mixing at 75°C during the night. The solvents evaporating were refluxed by use of a condensor. Part of the solvents is finally destilled-off until the solid fraction in the dispersion has reached 9.6w% solids. The water content of the dispersion was measured gravimetrically and was 40w%. The IPA content was 50.4%.

### Example 2: nanosilica modification

Surface modified nanosilica dispersions were prepared as follows. IPA-ST was used from Nissan Chemical Industries. To 100gr of IPA-ST 6.558gr of 3-methacryloxypropyl-trimethoxysilane (Dynasylan-MEMO from Degussa AG) and 2.789 gr water was added under stirring. The dispersion was left at 60oC for four hours under gentle stirring and reflux. After cooling the dispersion was filtered over a 1µm (micron) filter.

### Example 3: coating compositions

In Table 1 the composition of two examples and two reference coatings is given. The SR399 is dipentaeritrythol pentaacrylate, available from Sartomer. The photoinitiator is Irgacure 184, from Ciba. The silicone additive is Byk UV3500, from Degussa. The amounts are given in parts.

**Table 1: antistatic coating compositions**

| | Coating 1 | Coating 2 | Reference Coating 1 | Reference coating 2 |
|---|---|---|---|---|
| ATO dispersion | 80 | 80 | 80 | 80 |
| SR399 | 4 | 4 | 4 | 4 |
| Irgacure 184 | 0.1 | 0.1 | 0.1 | 0.1 |
| Byk UV3500 | 0.01 | 0.01 | 0.01 | 0.01 |
| 1-Methoxy-2-propanol | 115.89 | 215.89 | 0 | 0 |
| Isopropanol | 0 | 0 | 115.89 | 215.89 |

### Example 4: hardcoat coating compositions

A hardcoat comprising the nanosilica dispersion given in Example 2 was prepared. The composition is given in Table 2. PETIA is a mix of pentaerytrithol tri- and tetraacrylate from Cytec.The amounts are given in parts.

**Table 2: hardcoating composition**

| | Hardcoat composition |
|---|---|
| Nanosilica dispersion | 58.27 |
| PETIA | 23.31 |
| Irgacure 184 | 0.93 |
| Methylethylketone | 17.49 |

### Example 5: Preparation of antistatic coated substrates

Coated substrates were prepared with coating 1, 2, reference coating 1, 2 and the hardcoat in the following manner. Using a Meyer bar #12 coating formulation was spread on PET film, thickness 108µm (micron). The coating films were placed in an hot air oven of 70°C for 3 minutes. The coatings were cured using a Fusion D-lamp at an intensity of 1.8 J/cm². The coated substrates were left for at least 1 hour before characterization.

### Example 6: Preparation of hardcoated antistatic substrates

Coated substrates were prepared with hardcoating, coating 1, 2 and reference coating 1, 2 in the following manner. Using a Meyer bar #12 the hardcoating formulation was spread on PET film, thickness 108 µm (micron). The coating films were placed in an hot air oven of 70°C for 3 minutes. The coatings were cured using a Fusion D-lamp at an intensity of 0.6 J/cm². Following this the antistatic and reference coatings were spread on the hardcoated substrate with Meyer bar#12. The coating films were placed in an hot air oven of 70°C for 3 minutes. The coatings were cured using a Fusion D-lamp at an intensity of 1.8 J/cm². The coated substrates were left for at least 1 hour before characterization.

### Example 7: Characterisation of coated substrates

The coated substrates were characterized using the following techniques. The coated substrate was inspected visually for defects and appearance. The haze of the coated substrate was measured using a Byk-Gardner Haze-guard plus. The surface resistivity was measured using an IM6 Megohmeter with a ring electrode.

The pencil hardness was measured according to ASTM D3363. The ranking starts at low hardness (4B, 3B, 2B, 1B, HB, F) towards higher hardness (H, 2H, and 3H).

| | Hardcoat | Antistatic coating | Visual appearance | Haze | Surface resistivity | Pencil hardness |
|---|---|---|---|---|---|---|
| Substrate 1 | No | Coating 1 | Clear | 1.33 | 4 10⁷ Ω | F |
| Substrate 2 | Yes | Coating 1 | Clear | 1.83 | 1 10⁷ Ω | 2H |
| Substrate 3 | No | Coating 2 | Clear | 1.19 | 1 10⁷ Ω | B |
| Substrate 4 | Yes | Coating 2 | Clear | 1.24 | 1 10⁷ Ω | 2H |
| Substrate 5 | No | Reference coating 1 | Hazy | 8.30 | 2 10¹¹ Ω | 3B |
| Substrate 6 | Yes | Reference coating 1 | Hazy | 13.1 | 2 10⁷ Ω | 3B |
| Substrate 7 | No | Reference coating 2 | Hazy | 6.46 | 2 10⁸ Ω | 3B |
| Substrate 8 | Yes | Reference coating 2 | Hazy | 5.60 | 4 10⁷ Ω | 3B |
| Bare PET | - | - | Clear | 0.53 | > 10¹¹ Ω | F |

The examples demonstrate that the substrates coated with Coatings 1 and 2 have an excellent transparency, low haze, and a low surface resistivity. In the case that the substrate is coated with Coating 1 and 2 in combination with the hardcoat of Example 4, the coated substrate has an excellent pencil hardness of 2H as well.

In comparison, the substrates coated with Reference Coating 1 and 2 show a low transparency, a high haze, and high surface resistivity. Moreover, because of the poor coating homogeneity, the hardness of substrates coated with Reference Coating 1 and 2 with the hardcoat of Example 4 is low (3B) as well.

## Claims

1. A curable liquid composition comprising
a) 0.5-20 wt% of conductive particles
b) 0.4- 10wt% of a curable compound having at least two polymerizable groups
c) 5-50 wt% of water
d) 5-50 wt% of a solvent D
e) 30-80 wt% of a solvent E
wherein solvent D is an alcohol or a ketone and solvent E is an organic compound comprising one hydroxy group and one ether group, wherein the organic compound comprises between 3 and 8 carbon atoms, which forms an azeotrope with water.

2. The curable composition according to claim 1, wherein the composition comprises
a) 1-10 wt% of conductive particles
b) 0.5-5 wt% of a radiation curable compound having at least two polymerizable groups
c) 20-40 wt% water
d) 20-40 wt% of solvent D
e) 41-70 wt% of solvent E
wherein solvent D is an alcohol or a ketone and solvent E is an organic compound comprising one hydroxy group and one ether group, wherein the organic compound comprises between 3 and 8 carbon atoms, which forms
an azeotrope with water.

3. The composition according to claims 1-2, wherein the conductive particles are surface treated.

4. The composition according to any one of claims 1-3, wherein the curable compound contains methacrylate or acrylate groups.

5. The composition according to any one of claims 1-4, wherein the amount of solvent E is higher than the amount of water present in the composition.

6. The composition according to any one of claims 1-4, wherein solvent D is chosen from the group consisting of methanol, ethanol, isopropyl alcohol and isobutanol.

7. The composition according to any one of claims 1-4, wherein solvent D is isopropyl aloohol.

8. The composition according to any one of claims 1-6, wherein solvent E is chosen from the group consisting of 1-methoxy-2-propanol, 3-methoxy-1-butanol, and 2-methoxy-ethanol.

9. The composition according to any one of claims 1-6, wherein solvent E is 1-methoxy-2-propanol.

10. A method for making a film with a low surface resistivity, comprising the steps of
a) applying a thin layer of the composition as defined in any one of claims 1-8 on a substrate
b) evaporating the solvents from the coating layer and
c) curing the film

11. The method according to claims 10, wherein the film is cured by applying actinic radiation.

12. An article having at least one surface provided with a film having a low surface resistivity, obtained by a process according to any one of claims 10-11 or obtained by applying a composition as defined in any one of claims 1-9 to the at least one surface.

13. A display film having a coating obtained from a composition according to any one of claims 1-9.

14. A RIFD chip comprising a coating obtained from a composition according to any one of claims 1-9.

## Patentansprüche

1. Härtbare flüssige Zusammensetzung, welche das Folgende umfasst:
a) 0,5 bis 20 Gew.-% leitfähige Teilchen,
b) 0,4 bis 10 Ges,-% einer härtbaren Verbindung, welche mindestens zwei polymerisierbare Gruppen aufweist,
c) 5 bis 50 Gew.-% Wasser,
d) 5 bis 50 Gew.-% eines Lösungsmittels D,
e) 5 bis 50 Gew.-% eines Lösungsmittels E,
wobei es sich bei dem Lösungsmittel D um einen Alkohol oder ein Keton handelt und bei dem Lösungsmittel E um eine organische Verbindung handelt, welche eine Hydroxygruppe und eine Ethergruppe umfasst, wobei die organische Verbindung 3 bis 8 Kohlenstoffatome umfasst und ein Azeotrop mit Wasser bildet.

2. Härtbare Zusammensetzung nach Anspruch 1, wobei die Zusammensetzung das Folgende umfasst:
a) 1 bis 10 Gew.-% leitfähige Teilchen,
b) 0,5 bis 5 Gew.-% einer durch Strahlung härtbaren Verbindung, welche mindestens zwei polymerisierbare Gruppen aufweist,
c) 20 bis 40 Gew.-% Wasser,
d) 20 bis 40 Gew.-% eines Lösungsmittels D,
e) 41 bis 70 Gew.-% eines Lösungsmittels E.

3. Zusammensetzung nach einem der Ansprüche 1 bis 2, wobei die leitfähigen Teilchen oberflächenbehandelt sind.

4. Zusammensetzung nach einem der Ansprüche 1 bis 3, wobei die härtbare Verbindung Methacrylat- oder Acrylatgruppen enthält.

5. Zusammensetzung nach einem der Ansprüche 1 bis 4, wobei die Menge des Lösungsmittels E größer ist als die Menge des Wassers, das in der Zusammensetzung vorliegt.

6. Zusammensetzung nach einem der Ansprüche 1 bis 4, wobei das Lösungsmittel D aus der Gruppe ausgewählt ist, die aus Methanol, Ethanol, Isopropylalkohol und Isobutanol besteht.

7. Zusammensetzung nach einem der Ansprüche 1 bis 4, wobei es sich bei dem Lösungsmittel D um Isopropylakohol handelt.

8. Zusammensetzung nach einem der Ansprüche 1 bis 6, wobei das Lösungsmittel E aus der Gruppe ausgewählt ist, die aus 1-Methoxy-2-propanol, 1-Methoxy-1-butanol und 2-Methoxyethanol besteht.

9. Zusammensetzung nach einem der Ansprüche 1 bis 4, wobei es sich bei dem Lösungsmittels E um 1-Methoxy-2-propanol handelt.

10. Verfahren zur Herstellung einer Dünnschicht mit niedrigem Oberflächenwiderstand, welches die folgenden Schritte umfasst:
a) Aufbringen einer dünnen Schicht der Zusammensetzung nach einem der Ansprüche 1 bis 8 auf ein Substrat,
b) Verdampfen der Lösungsmittel der Beschichtung und
c) Härten der Dünnschicht.

11. Verfahren nach Anspruch 10, wobei die Dünnschicht mit aktinischer Strahlung gehärtet wird.

12. Gegenstand, welcher mindestens eine Fläche aufweist, die mit einer Dünnschicht mit niedrigem Oberflächenwiderstand versehen ist, die über ein Verfahren nach einem der Ansprüche 10 bis 11 erhalten wird oder erhalten wird, indem eine Zusammensetzung nach einem der Ansprüche 1 bis 9 auf die mindestens eine Fläche aufgebracht wird.

13. Dünnschicht für eine Anzeigevorrichtung, welche eine Beschichtung aufweist, die aus einer Zusammensetzung nach einem der Ansprüche 1 bis 9 erhalten wird.

14. RFID-Chip, welcher eine Beschichtung umfasst, die aus einer Zusammensetzung nach einem der Ansprüche 1 bis 9 erhalten wird.

## Revendications

1. Composition liquide durcissable comprenant
a) 0,5 à 20 % en poids de particules conductrices
b) 0,4 à 10 % en poids d'un composé durcissable ayant au moins deux groupes polymérisables
c) 5 à 50 % en poids d'eau
d) 5 à 50 % en poids d'un solvant D
e) 30 à 80 % en poids d'un solvant E
dans laquelle le solvant D est un alcool ou une cétone et le solvant E est un composé organique comprenant un groupe hydroxy et un groupe éther, dans lequel le composé organique comprend entre 3 et 8 atomes de carbone, qui forme un azéotrope avec l'eau.

2. Composition durcissable selon la revendication 1, laquelle composition comprend
a) 1 à 10 en poids de particules conductrices
b) 0,5 à 5 % en poids d'un composé durcissable par irradiation ayant au moins deux groupes polymérisables
c) 20 à 40 % en poids d'eau
d) 20 à 40 % en poids de solvant D
e) 41 à 70 % en poids de solvant E

3. Composition selon les revendications 1 et 2, dans laquelle les particules conductrices sont traitées en surface.

4. Composition selon l'une quelconque des revendications 1 à 3, dans laquelle le composé durcissable contient des groupes méthacrylate ou acrylate.

5. Composition selon l'une quelconque des revendications 1 à 4, dans laquelle la quantité de solvant E est supérieure à la quantité d'eau présente dans la composition.

6. Composition selon l'une quelconque des revendications 1 à 4, dans laquelle le solvant D est choisi dans le groupe constitué par le méthanol, l'éthanol, l'alcool isopropylique et l'isobutanol.

7. Composition selon l'une quelconque des revendications 1 à 4, dans laquelle le solvant D est l'alcool isopropylique.

8. Composition selon l'une quelconque des revendications 1 à 6, dans laquelle le solvant E est choisi dans le groupe constitué par le 1-méthoxy-2-propanol, le 3-méthoxy-1-butanol et le 2-méthoxyéthanol.

9. Composition selon l'une quelconque des revendications 1 à 6, dans laquelle le solvant E est le 1-méthoxy-2-propanol.

10. Procédé de fabrication d'un film ayant une faible résistivité superficielle, comprenant les étapes consistant à
a) appliquer une mince couche de composition telle que définie dans l'une quelconque des revendications 1 à 8 sur un substrat
b) évaporer les solvants de la couche de revêtement et
c) durcir le film

11. Procédé selon la revendication 10, dans lequel le film est durci en appliquant un rayonnement actinique.

12. Article ayant au moins une surface dotée d'un film ayant une faible résistivité superficielle, obtenu à l'aide d'un procédé selon l'une quelconque des revendications 10 à 11 ou obtenu en appliquant une composition telle que définie dans l'une quelconque des revendications 1 à 9 sur au moins une surface.

13. Film pour écran ayant un revêtement obtenu à partir d'une composition selon l'une quelconque des revendications 1 à 9.

14. Puce RFID comprenant un revêtement obtenu à partir d'une composition selon l'une quelconque des revendications 1 à 9.
